# EUROPEAN PATENT APPLICATION

(11) **EP 3 902 327 A1**
(43) Date of publication of application: **27.10.2021**
(21) Application number: 18945195.8
(22) Date of filing: 29.12.2018
(51) Int. Cl.: H04W 36/36

(54) **CELL CONNECTION PROCESSING METHOD AND APPARATUS, AND MOBILE TERMINAL AND STORAGE MEDIUM**

(71) Applicant: SHENZHEN HEYTAP TECHNOLOGY CORP., LTD., Shenzhen, Guangdong 518057 (CN); GUANGDONG OPPO MOBILE TELECOMMUNICATIONS CORP., LTD., Dongguan, Guangdong 523860 (CN)
(72) Inventor: LI, Weiqing, Dongguan, Guangdong 523860 (CN)
(74) Representative: Ipside
(86) International application number: PCT/CN2018/125697
(87) International publication number: WO 2020/133439

(57) **Abstract**

Disclosed are a cell connection processing method and apparatus, and a mobile terminal and a storage medium. The method comprises: acquiring wireless connection information of a mobile terminal, wherein the wireless connection information represents a feature of a wireless connection established by the mobile terminal; determining whether the wireless connection information of the mobile terminal satisfies a target condition; and if it is determined that the wireless connection information of the mobile terminal satisfies the target condition, configuring the mobile terminal to access a cell supporting VoLTE. In the method, after establishing a wireless connection meeting a target condition, a mobile terminal can be configured to access a cell supporting VoLTE, so that the risk of the mobile terminal accessing a pseudo base station cell can be reduced, the information security of the mobile terminal is improved, and thus, the user experience is improved.

## Description

### TECHNICAL FIELD

The present disclosure relates to the field of communication technologies, and in particular to a cell connection processing method, an apparatus, a mobile terminal, and a storage medium.

### BACKGROUND

"Pseudo base station" refers to a fake base station. The pseudo base station is generally formed by a host computer and a laptop. Through related devices such as a short message group sender and a short message sender, mobile phone card information within a range having a certain radius and being centered on the related devices can be searched, and by virtue of defect of mobile communication, fraudulent, advertising and sales short messages are forcibly sent to mobile phones of users by masquerading as an operator's base station and using mobile phone numbers from other people.

### SUMMARY OF THE DISCLOSURE

The present disclosure provides a cell connection processing method, an apparatus, a mobile terminal, and a storage medium to improve the above problems.

In a first aspect, the present disclosure provides a cell connection processing method, applied to a mobile terminal and including: obtaining wireless connection information of the mobile terminal, the wireless connection information indicating wireless connection established by the mobile terminal; determining whether the wireless connection information of the mobile terminal meets a target condition; and configuring the mobile terminal to access a cell supporting VoLTE, in response to the wireless connection information of the mobile terminal meeting the target condition.

In a second aspect, the present disclosure provides a cell connection processing apparatus, running on a mobile terminal and including: a wireless information obtaining unit, configured to obtain wireless connection information of the mobile terminal, the wireless connection information indicating wireless connection established by the mobile terminal; a wireless information determining unit, configured to determine whether the wireless connection information of the mobile terminal meets a target condition; and a wireless configuration unit, configured to configure the mobile terminal to access a cell supporting VoLTE, in response to the wireless connection information of the mobile terminal meeting the target condition.

In a third aspect, the present disclosure provides a mobile terminal, including one or more processors and a memory; wherein one or more programs are stored in the memory and configured to be executed by the one or more processors to perform the method as described above.

In a fourth aspect, the present disclosure provides a computer-readable storage medium, storing program code configured to perform the method as described above when executed.

In the cell connection processing method, apparatus, mobile terminal and storage medium according to the present disclosure, wireless connection information of the mobile terminal is obtained, the wireless connection information indicating wireless connection established by the mobile terminal; whether the wireless connection information of the mobile terminal meets a target condition is determined; and the mobile terminal is configured to access a cell supporting VoLTE, in response to the wireless connection information of the mobile terminal meeting the target condition. In this way, when establishing the wireless connection that meets the target condition, the mobile terminal is configured to access the cell supporting the VoLTE, thereby reducing the risk of the mobile terminal accessing a cell of a pseudo base station, improving the information security of the mobile terminal, and further improving user experience.

### BRIEF DESCRIPTION OF THE DRAWINGS

In order to more clearly describe the technical solutions in the embodiments of the present disclosure, the following will briefly introduce the drawings required in the description of the embodiments. Obviously, the drawings in the following description are only some embodiments of the present disclosure. For a person skilled in the art, other drawings can be obtained based on these drawings without creative work.
FIG. 1 is a schematic view of a system architecture of a mobile communication network system.
FIG. 2 is a schematic view of a system architecture of another mobile communication network system.
FIG. 3 is a flowchart of a cell connection processing method according to an embodiment of the present disclosure.
FIG. 4 is a flowchart of a cell connection processing method according to another embodiment of the present disclosure.
FIG. 5 is a schematic view of an interface in a cell connection processing method according to another embodiment of the present disclosure.
FIG. 6 is a flowchart of a cell connection processing method according to further another embodiment of the present disclosure.
FIG. 7 is a flowchart of a cell connection processing method according to further another embodiment of the present disclosure.
FIG. 8 is a structural block view of a cell connection processing apparatus according to an embodiment of the present disclosure.
FIG. 9 is a structural block view of a cell connection processing apparatus according to another embodiment of the present disclosure.
FIG. 10 is a structural block view of a cell connection processing apparatus according to further another embodiment of the present disclosure.
FIG. 11 is a structural block view of a cell connection processing apparatus according to further another embodiment of the present disclosure.
FIG. 12 is a structural block view of a mobile terminal according to an embodiment of the present disclosure.
FIG. 13 illustrates a storage unit for storing or carrying program codes for implementing the cell connection processing method according to an embodiment of the present disclosure.

### DETAILED DESCRIPTION

The technical solutions in the embodiments of the present disclosure will be clearly and completely described below in conjunction with the drawings in the embodiments of the present disclosure. Based on the embodiments of the present disclosure, all other embodiments obtained by a person skilled in the art without creative work shall fall within the scope of the present disclosure.

With the development of mobile communication technologies, the mobile communication has experienced the development of multiple versions such as 2G, 3G, and 4G. Whether it is the global system for mobile communication (GSM) mobile communication system or code division multiple access (CDMA) communication system in the early 2G era, or the long term evolution (LTE) system architecture in the later 4G era, base stations are of a important communication device.

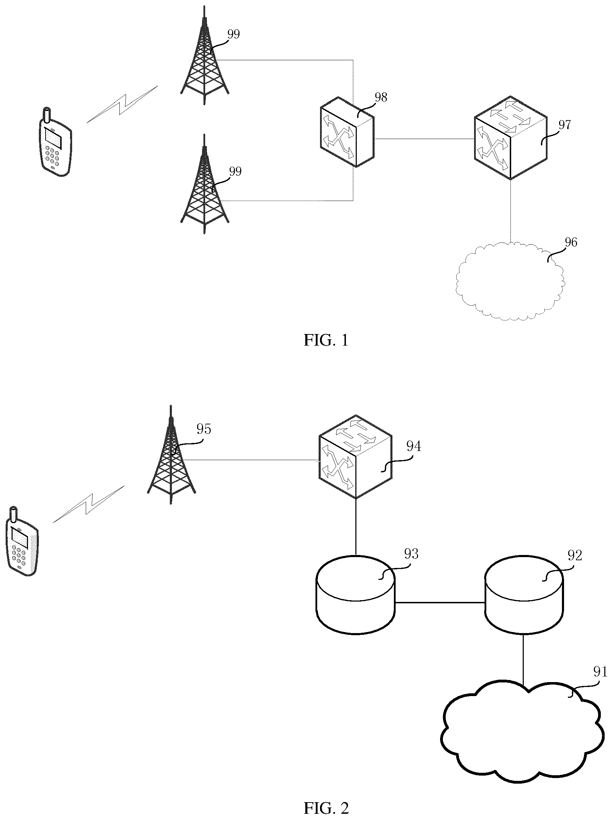

For example, FIG. 1 shows a schematic view of the architecture of a 2G mobile communication system. Base Transceiver Station (BTS) 99 are connected to a base station controller 98 as access devices of the mobile communication network. The base station controller 98 is connected to a mobile switching center 97. The mobile switching center 97 is further connected to a public switching telephone network 96 and the like. Another example is a schematic view of the architecture of a 4G mobile communication system shown in FIG. 2. An eNB 95 is connected to a mobility management entity (MME), that is, a mobility management node 94. The MME is connected to a serving gateway 93. The serving gateway 93 is then connected to a packet data gateway 92. The packet data gateway 92 is connected to a packet data network 91. It can be seen from FIG. 1 and FIG. 2 that in mobile communication systems, a base station, as a device that directly establishes a connection with mobile terminals, plays an important role in the overall system architecture. The base station generally refers to "public mobile communication base station", function of which is mainly providing signals to mobile terminals such as mobile phones and tablet computers. With the development of the communication technologies, the inventor discovered that a pseudo base station appeared.

The pseudo base station refers to a fake base station. The pseudo base station is generally formed by a host computer and a laptop. Through related devices such as a short message group sender and a short message sender, mobile phone card information within a range having a certain radius and being centered on the related devices can be searched, and by virtue of defect of mobile communication, fraudulent, advertising and sales short messages are forcibly sent to mobile phones of users by masquerading as an operator's base station and using mobile phone numbers from other people.

When a pseudo base station device is running, wireless signals sent by a mobile terminal is forcibly connected to the device, such that the mobile terminal has no access to services provided by the operator normally. Generally, the mobile terminal will be temporarily offline for 8-12 seconds and then return to normal. Some mobile terminals must be switched off and on to re-enter the network. In addition, the mobile terminal may frequently update its location, which leads to resource constraints of the wireless network and network congestion in this area, affecting normal communication of users.

Therefore, in the present disclosure, a cell connection processing method, an apparatus, a mobile terminal, and a storage medium are proposed to reduce accesses to the pseudo base station, such that the security of mobile terminal information may be improved.

It should be noted that the cell involved in the embodiments of the present disclosure may be regarded as a base station, or may be regarded as one cell among multiple cells carried by a base station.

The embodiments of the present disclosure will be described in detail with reference to the accompanying drawings.

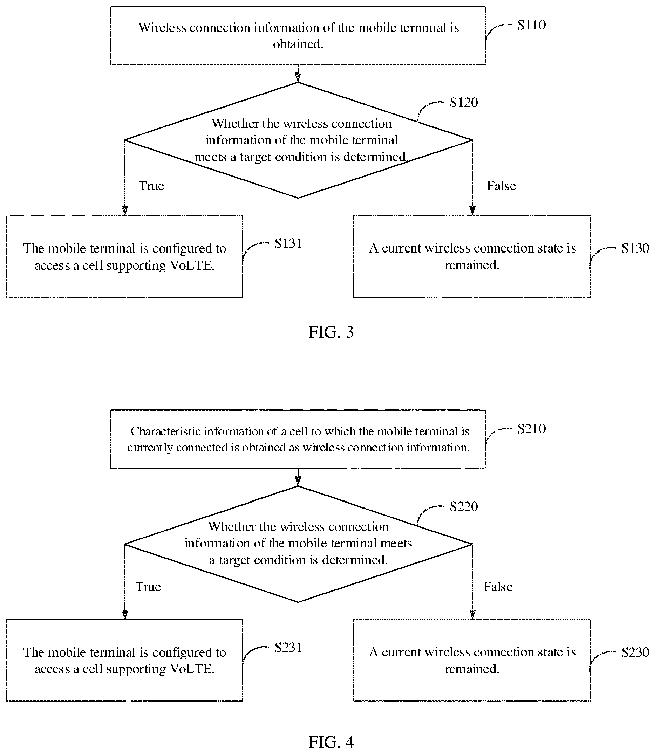

Referring to FIG. 3, a cell connection processing method according to an embodiment of the present disclosure is applied to a mobile terminal, and the method includes operations at blocks as followed.

At block S110: Wireless connection information of the mobile terminal is obtained, the wireless connection information indicating wireless connection established by the mobile terminal.

In the embodiments of the present disclosure, the wireless connection information includes characteristic information of a cell to which the mobile terminal is currently connected, or includes information of hotspots which can be currently searched by the mobile terminal or information of hotspots which has established a wireless connection.

At block S120: Whether the wireless connection information of the mobile terminal meets a target condition is determined.

It should be noted that in the embodiments of the present disclosure, the target condition indicates that a current location of the mobile terminal is a resident location or a previously visited location, for example, the home or company of the user of the mobile terminal. Alternatively, the target condition indicates that the mobile terminal has stayed at the current location for a period of time.

At block S130: A current wireless connection state is remained, in response to the wireless connection information of the mobile terminal not meeting the target condition.

The wireless connection state includes a connected cell and a service performed in the connected cell.

At block S131: The mobile terminal is configured to access a cell supporting VoLTE, in response to the wireless connection information of the mobile terminal meeting the target condition.

As described in the foregoing, the target condition indicates that the current location of the mobile terminal is a resident location or a previously-visited location, or alternatively, the target condition indicates that the mobile terminal has stayed at the current location for a period of time. Then, in order to reduce the probability of the mobile terminal accessing the pseudo base station when the target condition is currently satisfied, the mobile terminal may be configured to access a cell supporting the VoLTE.

It should be noted that although the mobile terminal will currently communicate based on the LTE standard when performing data communications, when performing voice services, the mobile terminal will automatically fall back to the 2G-related frequency band for communication. In the process of communicating based on the 2G, the mobile terminal will not authenticate the cell which the mobile terminal is accessing and will not determine the legitimacy of the cell which the mobile terminal is accessing, which may cause the mobile terminal to access the pseudo base station. In this case, when the wireless connection information of the mobile terminal is determined to meet the target condition, the mobile terminal is configured to access a cell supporting the VoLTE. Since the mobile terminal is connected to the cell supporting the VoLTE, even if the mobile terminal is making voice calls, a voice communication link will be established first based on the VoLTE mode. In this way, the mobile terminal will not fall back to the 2G-related frequency band for communication, and thus may not access the pseudo base station during the fallback process.

In some embodiments, a specified cell includes a 2G cell or a 3G cell.

In the cell connection processing method according to the present disclosure, wireless connection information of the mobile terminal is obtained, the wireless connection information indicating wireless connection established by the mobile terminal; whether the wireless connection information of the mobile terminal meets a target condition is determined; and the mobile terminal is configured to access a cell supporting VoLTE, in response to the wireless connection information of the mobile terminal meeting the target condition. In this way, when establishing the wireless connection that meets the target condition, the mobile terminal is configured to access the cell supporting the VoLTE, thereby reducing the risk of the mobile terminal accessing a cell of a pseudo base station, improving the information security of the mobile terminal, and further improving user experience.

Referring to FIG. 4, a cell connection processing method according to an embodiment of the present disclosure is applied to a mobile terminal, and the method includes operations at blocks as followed.

At block S210: Characteristic information of a cell to which the mobile terminal is currently connected is obtained as wireless connection information, the wireless connection information indicating wireless connection of the cell to which the mobile terminal is currently connected.

It should be noted that, in some embodiments, after the mobile terminal establishes a connection with the cell, the mobile terminal may record an identifier of the connected cell and a duration for the established connection in real time.

In some embodiments, the characteristic information of the cell includes a connection duration.

In some embodiments, the characteristic information of the cell includes an identifier of the cell.

The mobile terminal may configure the cell identify (CID) of the cell as the identifier of the identifier, and may also configure an identifier of a tracking area to which the cell belongs as the identifier of the cell.

At block S220: Whether the wireless connection information of the mobile terminal meets a target condition is determined.

It can be understood that a corresponding target condition may also be different as a content of the characteristic information of the cell is different.

In some embodiments, in cases that the characteristic information of the cell includes the connection duration, the determining whether the wireless connection information of the mobile terminal meets the target condition may include: determining whether a connection duration between the mobile terminal and the currently-connected cell is greater than a threshold duration; and determining that the wireless connection information of the mobile terminal meets the target condition, in response to the connection duration being greater than the threshold duration.

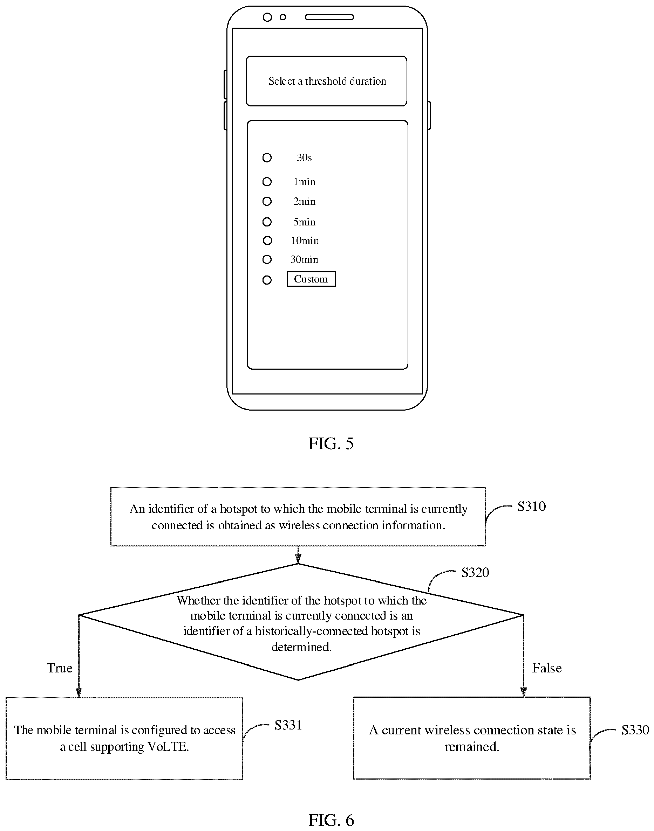

The threshold duration may be freely configured by the user, or the mobile terminal may update the configured value of the threshold duration according to usage habits of the user. For example, as shown in FIG. 5, in a selection interface of the threshold duration shown in FIG. 5, one duration may be selected from the displayed "30 seconds" to "30 minutes" as the threshold duration based on requirements from the user. For example, when "5 minutes" is selected, the mobile terminal detects whether the connection duration of the mobile terminal reaches 5 minutes. When the connection duration reaches 5 minutes, it is determined that the wireless connection information of the mobile terminal meets the target condition. For another example, when "10 minutes" is selected, the mobile terminal detects whether the connection duration of the mobile terminal reaches 10 minutes. When the connection duration reaches 10 minutes, it is determined that the wireless connection information of the mobile terminal satisfies the target condition.

Moreover, as shown in FIG. 5, in addition to these threshold durations that can be directly selected from "30 seconds" to "30 minutes" provided in the selection interface of the threshold duration, there is also a "custom" option. After the custom option is selected, any duration may be input as the threshold duration. For example, when 18 minutes is input in the "custom" option, the mobile terminal detects whether the connection duration of the mobile terminal reaches 18 minutes. When the connection duration reaches 18 minutes, it is determined that the wireless connection information of the mobile terminal satisfies the target condition.

In some embodiments, in cases that the characteristic information of the cell includes the identifier of the cell, the determining whether the wireless connection information of the mobile terminal meets the target condition may include: determining whether the identifier of the cell to which the mobile terminal is currently connected is an identifier of a resident cell, wherein the resident cell is a cell to which the mobile terminal has been connected in history; and determining that the wireless connection information of the mobile terminal meets the target condition, in response to the identifier of the cell to which the mobile terminal is currently connected being the identifier of the resident cell.

The resident cell may be a cell having the number of historical connection times greater than a specified number. Alternatively, the resident cell may be a cell having a historical connection duration greater than a specified duration.

In some embodiments, in cases that the characteristic information of the cell includes both the connection duration and the identifier of the cell, while the mobile terminal determines whether the wireless connection information of the mobile terminal meets the target condition, the mobile terminal may simultaneously determine the identifier and the connection duration of the connected cell. For example, the mobile terminal may detect whether the currently-connected cell is a resident cell or a cell with a designated identifier. In cases that the cell to which the mobile terminal is currently connected is determined to be the resident cell or the cell with the designated identifier, it is further determined whether the connected duration is the designated threshold duration. When it is determined that the connected duration is the threshold duration, it can be determined that the wireless connection information of the mobile terminal meets the target condition.

It should be noted that, generally, the tracking area in the mobile communication system may include multiple cells. In this case, the tracking area identifiers of the cells belonging to a same tracking area are the same. Then, the mobile terminal will not recalculate the connection duration due to the cell handover under the same tracking area while recording the connection duration. For example, a tracking area A includes a cell a1, a cell a2, and a cell a3. When the mobile terminal first accesses the cell a1, handovers to the cell a2 after staying in the cell a1 for t1, and then handovers to the cell a3 after staying in a2 for t2, then in this case, the connection duration for which the mobile terminal accesses the cell a3 is t1+t2 since the cell a1, the cell a2, and the cell a3 belong to the same tracking area.

Based on the foregoing, a tracking area B may exist adjacent to the tracking area A and include a cell b1. Then when the mobile terminal stays in the cell a1 for t1 and handovers to the cell b1, then the connection duration previously recorded by the mobile terminal will be cleared when the mobile terminal accesses the cell b1, because the cell a1 and the cell b1 belong to different tracking areas.

It should be noted that in the foregoing examples of connection duration, the cell handover not only includes soft handover and hard handover between cells, but also includes cell handover resulted from cell redirection or cell reselection.

At block S230: A current wireless connection state is remained, in response to the wireless connection information of the mobile terminal not meeting the target condition.

The wireless connection state includes a connected cell and a service performed in the connected cell.

At block S231: The mobile terminal is configured to access a cell supporting VoLTE, in response to the wireless connection information of the mobile terminal meeting the target condition.

It should be noted that, in a similar manner, the mobile terminal may also obtain the identifier of the tracking area to which the currently-connected cell of the mobile terminal belongs as the wireless connection information. In this case, the determining whether the wireless connection information of the mobile terminal meets the target condition may include: determining whether the identifier of the tracking area to which the currently-connected cell of the mobile terminal belongs is an identifier of an accessed tracking area; and determining that the wireless connection information of the mobile terminal meets the target condition, in response to the identifier of the tracking area being the identifier of the accessed tracking area.

In the cell connection processing method according to the present disclosure, characteristic information of a cell to which the mobile terminal is currently connected is obtained as wireless connection information, whether the wireless connection information of the mobile terminal meets a target condition is determined; and the mobile terminal is configured to access a cell supporting VoLTE, in response to the wireless connection information of the mobile terminal meeting the target condition. In this way, when establishing the wireless connection that meets the target condition, the mobile terminal is configured to access the cell supporting the VoLTE, thereby reducing the risk of the mobile terminal accessing a cell of a pseudo base station, improving the information security of the mobile terminal, and further improving user experience.

Referring to FIG. 6, a cell connection processing method according to an embodiment of the present disclosure is applied to a mobile terminal, and the method includes operations at blocks as followed.

At block S310: An identifier of a hotspot to which the mobile terminal is currently connected is obtained as wireless connection information.

At block S320: Whether the identifier of the hotspot to which the mobile terminal is currently connected is an identifier of a historically-connected hotspot is determined.

As described in the foregoing, the target condition indicates that the current location of the mobile terminal is a resident location or a location that has been visited in history. It can be understood that for a fixed location, the hotspots that can be searched or connected are the same. For example, in cases that the hotspot in the home of the user of the mobile terminal is hotspot A, the mobile terminal may identify hotspots that can be searched. When the hotspot A is identified, it is determined that the mobile terminal is already located in the home of the user of the mobile terminal. Furthermore, it can also be determined that the identifier of the hotspot currently searched by the mobile terminal is an identifier of a historically-connected hotspot.

At block S330: A current wireless connection state is remained, in response to the identifier of the currently-connected hotspot being an identifier of a historically-connected hotspot.

At block S331: The wireless connection information of the mobile terminal is determined to meet the target condition and the mobile terminal is configured to access a cell supporting VoLTE, in response to the identifier of the currently-connected hotspot being an identifier of a historically-connected hotspot.

In the cell connection processing method according to the present disclosure, an identifier of a hotspot to which the mobile terminal is currently connected is obtained as wireless connection information; whether the identifier of the hotspot to which the mobile terminal is currently connected is an identifier of a historically-connected hotspot is determined; and the mobile terminal is configured to access a cell supporting VoLTE, in response to the wireless connection information of the mobile terminal meeting the target condition. In this way, when establishing the wireless connection that meets the target condition, the mobile terminal is configured to access the cell supporting the VoLTE, thereby reducing the risk of the mobile terminal accessing a cell of a pseudo base station, improving the information security of the mobile terminal, and further improving user experience.

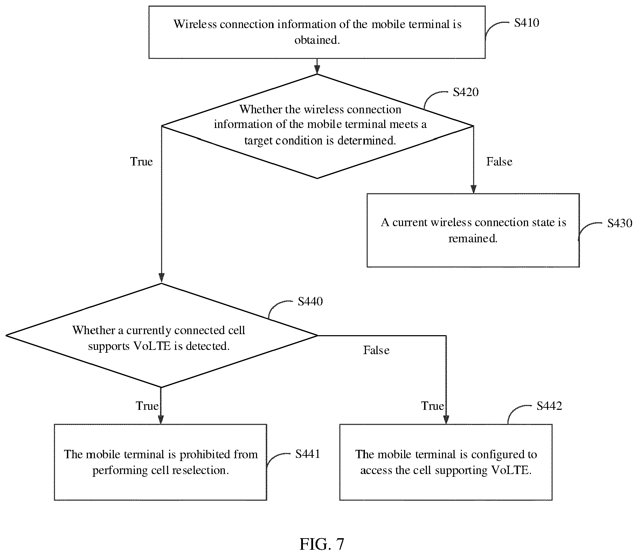

Referring to FIG. 7, a cell connection processing method according to an embodiment of the present disclosure is applied to a mobile terminal, and the method includes operations at blocks as followed.

At block S410: Wireless connection information of the mobile terminal is obtained, the wireless connection information indicating wireless connection established by the mobile terminal.

At block S420: Whether the wireless connection information of the mobile terminal meets a target condition is determined.

At block S430: A current wireless connection state is remained, in response to the wireless connection information of the mobile terminal not meeting the target condition.

At block S431: Whether a currently-connected cell supports VoLTE is detected, in response to the wireless connection information of the mobile terminal meeting the target condition.

At block S440: The mobile terminal is prohibited from performing cell reselection, in response to the currently-connected cell supporting the VoLTE.

It should be noted that the mobile terminal will start cell search after being turned on or after being switched from the flight mode to the online mode. During the cell search, data is received at several central frequency points at which there exists cells of a mobile network (e.g. LTE network), and the RSSI is calculated, such that whether a cell may exist around the frequency point may be determined based on the received signal strength. In cases that the mobile terminal saves the frequency point and operator information when being turned off last time, the mobile terminal may first try to reside on the cell at which the mobile terminal last resided, after being turned on. In case of no prior information, the mobile terminal may search full frequency points, find a frequency point with a strong signal, and then try to reside.

The cell reselection refers to a process in which the mobile terminal in an idle state monitors signal quality of the current cell and neighbor cells, and then selects a best cell for service signals. When the signal quality and level of a neighbor cell meet an S criterion and a certain reselection decision criterion, the mobile terminal will access and reside on the cell.

After the mobile terminal successfully resides on this cell, the mobile terminal will continue to measure the cell. An RRC layer obtains Srxlev (i.e. S criterion) based on RSRP measurement results, and compares the Srxlev with Sintrasearch (i.e. intra-frequency measurement start threshold) and Snonintrasearch (non-intra-frequency/non-intra-system measurement start threshold) as a determination condition for starting neighbor cells measurement.

Based on the foregoing, it can be known that when in the idle state, the mobile terminal will periodically perform a neighbor cell measurement, thereby selecting the cell with the best condition for connection.

Specifically, it should be noted that the mobile communication network usually includes three major components: an access network, a bearer network, and a core network. The access network acts like a "window" and is responsible for receiving data. The bearer network acts like a "truck" and is responsible for sending and receiving data. The core network acts like a "management hub" and is responsible for managing the data, sorting the data, and then instructing the data where to go.

Generally, a network air interface in the access network is configured to implement information interaction between the mobile terminal and the base station of the mobile communication network, and the information on the network air interface is carried on various logical channels. The logical channels may be divided into two categories, i.e. a traffic channel (TCH) and a control channel (CCH). The TCH is mainly configured for transmission services between the network and mobile terminals, such as voice, data, etc. The CCH is configured as a channel for transmitting signaling information and short packet data. A broadcast channel (BCH) in the CCH is configured to transmit information by broadcast, and a broadcast control channel (BCCH) in the BCH is configured to transmit information to the base station. The mobile terminal broadcasts common information, such as system messages.

After receiving the system messages, the mobile terminal may select whether to establish a connection with the cell based on measurement of the system messages. After the mobile terminal successfully synchronizes with the base station, the mobile terminal will read master information block (MIB) information and system information blocks (SIB) information in the system message, and determine whether the current cell is suitable for connection by analyzing sib1 in the SIB information.

In this case, when a cell of pseudo base station is included in the measured neighbor cells, the mobile terminal may have the possibility of accessing the pseudo base station. While in the present disclosure, after the mobile terminal detects that the currently-connected cell supports the VoLTE, the mobile terminal is prohibited from performing the cell reselection, such that the mobile terminal will not access the pseudo base station.

It can be understood that, the farther the mobile terminal is away from a signal transmission location of the currently-connected cell, the lower the strength of signals emitted by the currently-connected cell and received by the mobile terminal will become, when the signal reception strength of the mobile terminal remains unchanged. When the strength of the signals emitted by the currently-connected cell and received by the mobile terminal is less than a threshold, the mobile terminal will perform cell reselection and then select a cell with better signal to access. Thus, the prohibiting the mobile terminal from performing cell reselection may include: detecting received signal strength of broadcast signals transmitted by the cell at a set frequency; in response to the received signal strength being greater than a first strength threshold, prohibiting the mobile terminal from performing the cell reselection; and in response to the received signal strength being less than the first strength threshold, the mobile terminal is allowed to perform the cell reselection, such that the mobile terminal can reduce the probability of accessing pseudo base stations while still performing cell reselection according to an existing communication protocols to limit communication interruptions.

It should be noted that the first strength threshold may be a signal strength threshold for cell reselection defined in the communication protocol followed by the mobile terminal when connecting to the cell. In addition, the first strength threshold may also be greater than the signal strength threshold for cell reselection defined in the communication protocol followed by the mobile terminal when connecting to the cell, such that the mobile terminal can perform the cell reselection more accurately according to the current communication protocol and limit communication interruptions to a greater extent.

The mobile terminal consumes certain CPU resources and power during the detection process. As an implementation, the set frequency may be increased in response to the mobile terminal detecting that the received signal strength is greater than the first strength threshold and less than a second strength threshold, and the set frequency may be reduced in response to the mobile terminal detecting that the received signal strength is greater than the second strength threshold. It can be understood that when the mobile terminal detects that the received signal strength is greater than the second strength threshold, it means that the mobile terminal is closer to the signal transmission point of the connected cell, indicating that the probability of the cell handover is low. When the mobile terminal detects that the received signal strength is greater than the first strength threshold and less than the second strength threshold, it means that the mobile terminal has begun to move away from the signal transmission point of the connected cell, indicating that there is already a tendency to perform the cell handover. In order to obtain a current movement trend of the mobile terminal in a timelier manner, the set frequency may be increased, such that the mobile terminal can be allowed to initiate the cell reselection in time.

For example, when it is detected that the received signal strength is greater than the second strength threshold, the mobile terminal can be configured with "once every 3 seconds" as the set frequency to detect the received signal strength of the broadcast signals transmitted by the cell. When the mobile terminal detects that the received signal strength is greater than the first strength threshold and less than the second strength threshold, the frequency may be increased to "once every 1 second". When the mobile terminal again detects that the received signal strength is greater than the second strength threshold, then the set frequency may be again reduced to "once every 3 seconds".

Furthermore, as an implementation, at block S441: The mobile terminal is prohibited from performing cell redirection, in response to the currently-connected cell supporting the VoLTE.

The prohibiting the mobile terminal from performing cell redirection may include: prohibiting the mobile terminal from redirecting to a specified cell, wherein authenticating the specified cell by the mobile terminal is not supported during an access process.

At block S442: The mobile terminal is configured to access the cell supporting VoLTE, in response to the currently-connected cell not supporting the VoLTE.

The configuring the mobile terminal to access the cell supporting the VoLTE includes: triggering the mobile terminal to perform cell reselection; detecting whether the cell supporting the VoLTE exists among cells obtained by neighbor cell measurement;

determining the cell supporting the VoLTE as a target cell for reselection, in response to the cell supporting the VoLTE being detected; and configuring the mobile terminal to access the target cell.

It should be noted that, in order to ensure that communication of the user is not affected, the mobile terminal continues to remain the connection with the currently-connected cell, in response to no cell supporting the VoLTE being detected.

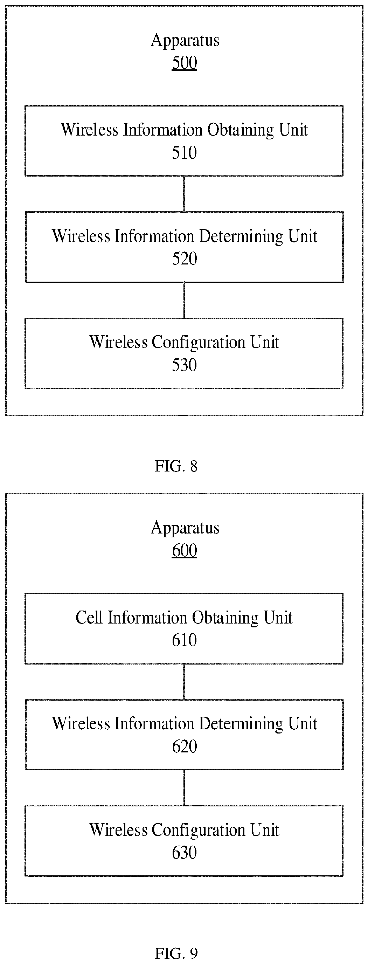

Referring to FIG. 8, a cell connection processing apparatus 500 according to an embodiment of the present disclosure runs on a mobile terminal and includes:

The wireless information obtaining unit 510 is configured to obtain wireless connection information of the mobile terminal, the wireless connection information indicating wireless connection established by the mobile terminal.

The wireless information determining unit 520 is configured to determine whether the wireless connection information of the mobile terminal meets a target condition.

The wireless configuration unit 530 is configured to configure the mobile terminal to access a cell supporting VoLTE in response to the wireless connection information of the mobile terminal meeting the target condition.

In the cell connection processing apparatus according to the present disclosure, wireless connection information of the mobile terminal is obtained, the wireless connection information indicating wireless connection established by the mobile terminal; whether the wireless connection information of the mobile terminal meets a target condition is determined; and the mobile terminal is configured to access a cell supporting VoLTE, in response to the wireless connection information of the mobile terminal meeting the target condition. In this way, when establishing the wireless connection that meets the target condition, the mobile terminal is configured to access the cell supporting the VoLTE, thereby reducing the risk of the mobile terminal accessing a cell of a pseudo base station, improving the information security of the mobile terminal, and further improving user experience.

Referring to FIG. 9, a cell connection processing apparatus 600 according to an embodiment of the present disclosure runs on a mobile terminal and includes:

The cell information obtaining unit 610 is configured to obtain characteristic information of a cell to which the mobile terminal is currently connected as wireless connection information, the wireless connection information indicating wireless connection of the cell currently connected to the mobile terminal.

As an implementation, the characteristic information of the cell includes a connection duration.

As another implementation, the characteristic information of the cell includes an identifier of the cell.

The wireless information determining unit 620 is configured to determine whether the wireless connection information of the mobile terminal meets a target condition.

It can be understood that a corresponding target condition may also be different as a content of the characteristic information of the cell is different.

In some embodiments, in cases that the characteristic information of the cell includes the connection duration, the wireless information determining unit 620 is specifically configured to determine whether a connection duration between the mobile terminal and the currently-connected cell is greater than a threshold duration; and determine that the wireless connection information of the mobile terminal meets the target condition, in response to the connection duration being greater than the threshold duration.

In some embodiments, in cases that the characteristic information of the cell includes the identifier of the cell, the wireless information determining unit 620 is specifically configured to determine whether the identifier of the cell to which the mobile terminal is currently connected is an identifier of a resident cell, wherein the resident cell is a cell to which the mobile terminal has been connected in history; and determine that the wireless connection information of the mobile terminal meets the target condition, in response to the identifier of the cell to which the mobile terminal is currently connected being the identifier of the resident cell.

The resident cell may be a cell having the number of historical connection times greater than a specified number. Alternatively, the resident cell may be a cell having a historical connection duration greater than a specified duration.

In some embodiments, in cases that the characteristic information of the cell includes both the connection duration and the identifier of the cell, while the mobile terminal determines whether the wireless connection information of the mobile terminal meets the target condition, the wireless information determining unit 620 is specifically configured to simultaneously determine the identifier and the connection duration of the connected cell.

The wireless configuration unit 630 is configured to remain a current wireless connection state in response to the wireless connection information of the mobile terminal not meeting the target condition.

The wireless connection state includes a connected cell and a service performed in the connected cell.

The wireless configuration unit 630 is configured to configure the mobile terminal to access a cell supporting VoLTE in response to the wireless connection information of the mobile terminal meeting the target condition.

It should be noted that, as an implementation, the mobile terminal may also obtain the identifier of the tracking area to which the currently-connected cell of the mobile terminal belongs as the wireless connection information. In this case, the determining whether the wireless connection information of the mobile terminal meets the target condition may include: determining whether the identifier of the tracking area to which the currently-connected cell of the mobile terminal belongs is an identifier of an accessed tracking area; and determining that the wireless connection information of the mobile terminal meets the target condition, in response to the identifier of the tracking area being the identifier of the accessed tracking area.

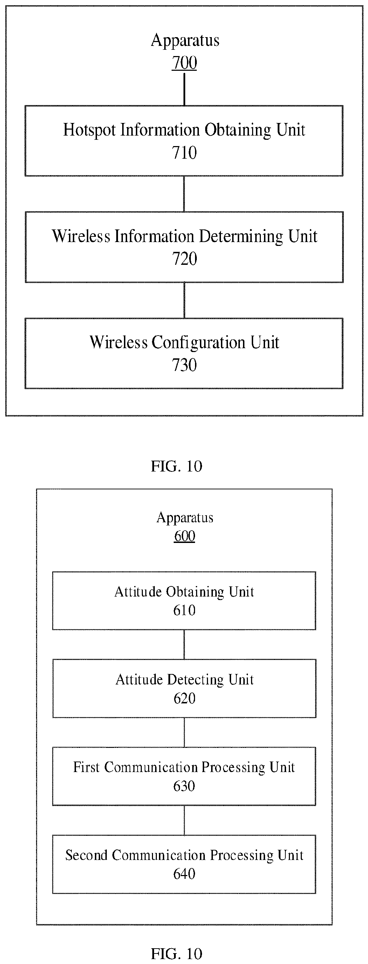

Referring to FIG. 10, a cell connection processing apparatus 700 according to an embodiment of the present disclosure runs on a mobile terminal and includes:

The hotspot information obtaining unit 710 is configured to obtain an identifier of a hotspot to which the mobile terminal is currently connected as wireless connection information.

The wireless information determining unit 720 is configured to determine whether the identifier of the hotspot to which the mobile terminal is currently connected is an identifier of a historically-connected hotspot.

The wireless configuration unit 730 is configured to remain a current wireless connection state in response to the identifier of the currently-connected hotspot being an identifier of a historically-connected hotspot.

The wireless configuration unit 730 is configured to determine that the wireless connection information of the mobile terminal meets the target condition and configure the mobile terminal to access a cell supporting VoLTE in response to the identifier of the currently-connected hotspot being an identifier of a historically-connected hotspot.

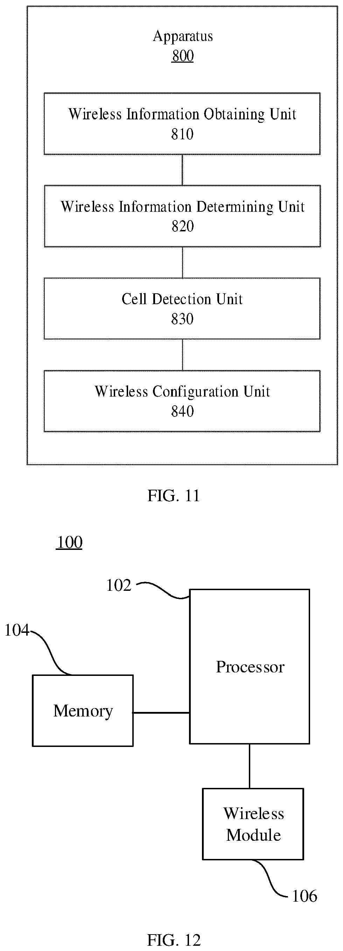

Referring to FIG. 11, a cell connection processing apparatus 800 according to an embodiment of the present disclosure runs on a mobile terminal includes:

The wireless information obtaining unit 810 is configured to obtain wireless connection information of the mobile terminal, the wireless connection information indicating wireless connection established by the mobile terminal.

The wireless information determining unit 820 is configured to determine whether the wireless connection information of the mobile terminal meets a target condition.

The cell detection unit 830 is configured to detect whether a currently-connected cell supports VoLTE in response to the wireless connection information of the mobile terminal meeting the target condition.

The wireless configuration unit 840 is configured to prohibit the mobile terminal from performing cell reselection in response to the currently-connected cell supporting the VoLTE.

As an implementation, the wireless configuration unit 840 is specifically configured to detect received signal strength of broadcast signals transmitted by the cell at a set frequency; and prohibit the mobile terminal from performing the cell reselection, in response to the received signal strength being greater than a first strength threshold.

In some embodiments, the wireless configuration unit 840 is further configured to increase the set frequency in response to the mobile terminal detecting that the received signal strength is greater than the first strength threshold and less than a second strength threshold; and reduce the set frequency in response to the mobile terminal detecting that the received signal strength is greater than the second strength threshold.

Furthermore, as an implementation, the wireless configuration unit 840 is further configured to prohibit the mobile terminal from performing cell redirection in response to the currently-connected cell supporting the VoLTE.

The wireless configuration unit 840 is specifically configured to prohibit the mobile terminal from redirecting to a specified cell, wherein authenticating the specified cell by the mobile terminal is not supported during an access process.

The wireless configuration unit 840 is further configured to configure the mobile terminal to access the cell supporting the VoLTE in response to the currently-connected cell not supporting the VoLTE.

The wireless configuration unit 840 is specifically configured to trigger the mobile terminal to perform cell reselection; detect whether the cell supporting the VoLTE exists among cells obtained by neighbor cell measurement; and determine the cell supporting the VoLTE as a target cell for reselection, in response to the cell supporting the VoLTE being detected; and configure the mobile terminal to access the target cell.

It should be noted that, in order to ensure that communication of the user is not affected, the mobile terminal continues to remain the connection with the currently-connected cell, in response to no cell supporting the VoLTE being detected.

It should be noted that a person skilled in the art can clearly understand that for convenience and brevity of the description, the specific working process of the apparatus and unit described above may refer to the corresponding process in the foregoing method embodiments, which will not be repeated here. In the several embodiments provided in the disclosure, the coupling between the modules may be electrical. In addition, each functional module in each embodiment of the present disclosure may be integrated into one processing module, or each module may exist alone physically, or two or more modules may be integrated into one module. The above-mentioned integrated modules may be implemented in the form of hardware or software functional modules.

In summary, by virtue of the cell connection processing method, apparatus, mobile terminal, and storage medium according to the present disclosure, wireless connection information of the mobile terminal is obtained, the wireless connection information indicating wireless connection established by the mobile terminal; whether the wireless connection information of the mobile terminal meets a target condition is determined; and the mobile terminal is configured to access a cell supporting VoLTE, in response to the wireless connection information of the mobile terminal meeting the target condition. In this way, when establishing the wireless connection that meets the target condition, the mobile terminal is configured to access the cell supporting the VoLTE, thereby reducing the risk of the mobile terminal accessing a cell of a pseudo base station, improving the information security of the mobile terminal, and further improving user experience.

Hereinafter, a mobile terminal according to the present disclosure will be described with reference to FIG. 9.

Referring to FIG. 9, based on the foregoing cell connection processing method and apparatus, an embodiment of the present disclosure also provides a mobile terminal 100 that can execute the cell connection processing method. The mobile terminal 100 includes one or more (of which only one is shown) a processor 102, a memory 104, and a wireless module 106 coupled to each other. The memory 104 stores a program that can execute the content in the foregoing embodiments, and the processor 102 can execute the program stored in the memory 104.

The processor 102 may include one or more processing cores. The processor 102 connects various parts of the entire mobile terminal 100 through various interfaces and lines, and executes various functions and processing data of the mobile terminal 100 by running or executing instructions, programs, code sets, or instruction sets stored in the memory 104 and calling data stored in the memory 104. In some embodiments, the processor 102 may be implemented in at least one hardware form of digital signal processing (DSP), field-programmable gate array (FPGA), and programmable logic array (PLA). The processor 102 may integrate one or a combination of a central processing unit (CPU), a graphics processing unit (GPU), a modem, and the like. The CPU mainly processes the operating system, user interface, and application programs. The GPU is configured for rendering and drawing of display content. The modem is configured for processing wireless communication. It can be understood that the modem may not be integrated into the processor 102, but may be implemented by a communication chip alone.

The memory 104 may include random access memory (RAM) and/or read-only memory (ROM). The memory 104 may be configured to store instructions, programs, codes, code sets or instruction sets. The memory 104 may include a storage program area and a storage data area. The storage program area may store instructions for implementing the operating system, instructions for implementing at least one function (such as touch function, sound playback function, image playback function, etc.), instructions for implementing the following method embodiments, etc. The data storage area can also store data (such as phone book, audio and video data, chat record data) created by the terminal 100 during use.

The wireless module 106 is configured to receive and send electromagnetic waves, realize mutual conversion between electromagnetic waves and electrical signals, so as to communicate with a communication network or other devices, such as communication with audio playback devices. The wireless module 106 may include various existing circuit elements for performing these functions, such as an antenna, a radio frequency transceiver, a digital signal processor, an encryption/decryption chip, a subscriber identity module (SIM) card, a memory, etc. The wireless module 106 can communicate with various networks such as Internet, an intranet, and a wireless network, or communicate with other devices through a wireless network. The wireless network may include a cellular telephone network, a wireless local area network, or a metropolitan area network. For example, the wireless module 106 may exchange information with the base station.

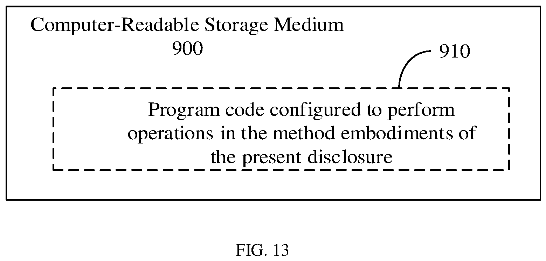

Referring to FIG. 13, FIG. 13 shows a structural block view of a computer-readable storage medium according to an embodiment of the present disclosure. The computer-readable medium 900 stores program code, and the program code can be invoked by a processor to execute the method described in the foregoing method embodiments.

The computer-readable storage medium 900 may be an electronic memory such as flash memory, electrically erasable programmable read only memory (EEPROM), EPROM, hard disk, or ROM. In some embodiments, the computer-readable storage medium 800 includes a non-transitory computer-readable storage medium. The computer-readable storage medium 900 has a storage space for the program code 910 for executing any method steps in the foregoing methods. The program codes can be read from or written into one or more computer program products. The program code 910 may be compressed in an appropriate form, for example.

Finally, it should be noted that the above embodiments are only to illustrate the technical solutions of the present disclosure, not to limit it. Although the present disclosure has been described in detail with reference to the foregoing embodiments, a person skilled in the art should understand that the technical solutions recorded in the foregoing embodiments may be modified, or some of the technical features may be equivalently replaced. These modifications or replacements do not drive the essence of the corresponding technical solutions to deviate from the spirit and scope of the technical solutions of the embodiments of the present disclosure.

## Claims

1. A cell connection processing method, applied to a mobile terminal and **characterized by** comprising:
obtaining wireless connection information of the mobile terminal, the wireless connection information indicating wireless connection established by the mobile terminal;
determining whether the wireless connection information of the mobile terminal meets a target condition; and
configuring the mobile terminal to access a cell supporting VoLTE, in response to the wireless connection information of the mobile terminal meeting the target condition.

2. The cell connection processing method according to claim 1, wherein the obtaining the wireless connection information of the mobile terminal comprises:
obtaining characteristic information of a cell to which the mobile terminal is currently connected as the wireless connection information.

3. The cell connection processing method according to claim 2, wherein the characteristic information of the cell comprises a connection duration; the determining whether the wireless connection information of the mobile terminal meets the target condition comprises:
determining whether the connection duration between the mobile terminal and the currently-connected cell is greater than a threshold duration; and
determining that the wireless connection information of the mobile terminal meets the target condition, in response to the connection duration being greater than the threshold duration.

4. The cell connection processing method according to claim 2, wherein the characteristic information of the cell comprises an identifier of the cell; the determining whether the wireless connection information of the mobile terminal meets the target condition comprises:
determining whether the identifier of the cell to which the mobile terminal is currently connected is an identifier of a resident cell, wherein the resident cell is a cell to which the mobile terminal has connected in history; and
determining that the wireless connection information of the mobile terminal meets the target condition, in response to the identifier of the cell to which the mobile terminal is currently connected being the identifier of the resident cell.

5. The cell connection processing method according to claim 4, wherein the resident cell is a cell having the number of historical connection times greater than a specified number; or the resident cell is a cell having a historical connection duration greater than a specified duration.

6. The cell connection processing method according to claim 1, wherein the obtaining the wireless connection information of the mobile terminal comprises:
obtaining an identifier of a tracking area as the wireless connection information, wherein the tracking area belongs to the currently-connected cell of the mobile terminal;
the determining whether the wireless connection information of the mobile terminal meets the target condition comprises:
determining whether the identifier of the tracking area is an identifier of an accessed tracking area; and
determining that the wireless connection information of the mobile terminal meets the target condition, in response to the identifier of the tracking area being the identifier of the accessed tracking area.

7. The cell connection processing method according to claim 1, wherein the obtaining the wireless connection information of the mobile terminal comprises: obtaining an identifier of a hotspot to which the mobile terminal is currently connected as the wireless connection information; and
the determining whether the wireless connection information of the mobile terminal meets the target condition comprises:
determining whether the identifier of the hotspot is an identifier of a historically-connected hotspot; and
determining that the wireless connection information of the mobile terminal meets the target condition, in response to the identifier of the hotspot being the identifier of the historically-connected hotspot.

8. The cell connection processing method according to any one of claims 1-7, before the configuring the mobile terminal to access the cell supporting the VoLTE, further comprising:
detecting whether the currently-connected cell supports the VoLTE; and
performing the configuring the mobile terminal to access the cell supporting the VoLTE, in response to the currently-connected cell not supporting the VoLTE.

9. The cell connection processing method according to claim 8, further comprising:
prohibiting the mobile terminal from performing cell reselection, in response to the currently-connected cell supporting the VoLTE.

10. The cell connection processing method according to claim 9, wherein the prohibiting the mobile terminal from performing the cell reselection comprises:
detecting received signal strength of broadcast signals transmitted by the cell at a set frequency; and
prohibiting the mobile terminal from performing the cell reselection, in response to the received signal strength being greater than a first strength threshold.

11. The cell connection processing method according to claim 10, further comprising:
increasing the set frequency, in response to the received signal strength being greater than the first strength threshold and less than a second strength threshold; and
reducing the set frequency, in response to the received signal strength being greater than the second strength threshold.

12. The cell connection processing method according to any one of claims 8-11, further comprising:
prohibiting the mobile terminal from performing cell redirection, in response to the currently-connected cell supporting the VoLTE.

13. The cell connection processing method according to any one of claims 8-12, wherein the prohibiting the mobile terminal from performing the cell redirection comprises:
prohibiting the mobile terminal from redirecting to a specified cell, wherein authenticating the specified cell by the mobile terminal is not supported during an access process.

14. The cell connection processing method according to any one of claims 1-13, wherein the configuring the mobile terminal to access the cell supporting the VoLTE comprises:
triggering the mobile terminal to perform cell reselection;
detecting whether the cell supporting the VoLTE exists among cells obtained by neighbor cell measurement;
determining the cell supporting the VoLTE as a target cell for reselection, in response to detecting the cell supporting the VoLTE; and
configuring the mobile terminal to access the target cell.

15. The cell connection processing method according to claim 14, further comprising:
configuring the mobile terminal to remain connection with the currently-connected cell, in response to no cell supporting the VoLTE.

16. The cell connection processing method according to any one of claims 13-15, wherein the specified cell comprises a 2G cell or a 3G cell.

17. A cell connection processing apparatus, running on a mobile terminal and comprising:
a wireless information obtaining unit, configured to obtain wireless connection information of the mobile terminal, the wireless connection information indicating wireless connection established by the mobile terminal;
a wireless information determining unit, configured to determine whether the wireless connection information of the mobile terminal meets a target condition; and
a wireless configuration unit, configured to configure the mobile terminal to access a cell supporting VoLTE, in response to the wireless connection information of the mobile terminal meeting the target condition.

18. The cell connection processing apparatus according to claim 17, wherein the wireless information obtaining unit is specifically configured to obtain characteristic information of a cell to which the mobile terminal is currently connected as the wireless connection information.

19. A mobile terminal, comprising one or more processors and a memory;
wherein one or more programs are stored in the memory and configured to be executed by the one or more processors to perform a method according to any one of claims 1-16.

20. A computer-readable storage medium, storing program code configured to perform a method according to any one of claims 1-16 when executed.
